# EUROPEAN PATENT APPLICATION

(11) **EP 3 838 557 A1**
(43) Date of publication of application: **23.06.2021**
(21) Application number: 20215481.1
(22) Date of filing: 18.12.2020
(51) Int. Cl.: B29C 64/118, B29C 64/209, B33Y 30/00, B33Y 40/00

(54) **3D PRINT HEAD, A 3D PRINTER AND A 3D PRINTING PROCESS FOR 3D PRINTING PVC**

(30) Priority: 20.12.2019 FR 1915227
(71) Applicant: Raccords et Plastiques Nicoll, 49300 Cholet (FR)
(72) Inventor: Serin, Jean-Pierre, 49300 Cholet (FR); Joubert, Pierre, 49300 Cholet (FR)
(74) Representative: Sonnenberg Harrison Partners

(57) **Abstract**

A print head (1) for 3D printing on a deposition surface, using a PVC filament, a 3D printer for printing of a PVC object, and a 3D PVC printing process. The print head comprises a cold body (30) into which the PVC filament in a solid state is fed, provided for transmitting the PVC filament, still in a solid state, to a hot body (10) with a lower face (12) ending in a nozzle (20) with an output orifice for the output of PVC in the form of extrudate. The printer nozzle (20) and the hot body (10) are in one piece.

## Description

### Technical Field

The present invention relates to the field of 3D printing. More particularly, the present invention relates to a 3D print head for 3D printing PVC, a 3D printer for 3D printing PVC and a process for 3D printing using PVC.

### Prior art

Additive manufacturing of thermoplastic polymer parts has developed into different forms. For example, the technique commonly called 3D printing or even FDM (Filament Deposition Modeling), consists in continuous depositing, by a 3D printing nozzle, a filament of melted material over a path, layer after layer, gradually building up an object in three dimensions. The adjacent layers are welded to each other, namely by the heat of the melted filament which provides by conduction the heat necessary for reheating the preceding layer, causing the welding of the two parts.

Feeding raw material into the nozzle is done by a filament drive mechanism that controls the progress of the cold, solid filament through the hot nozzle where melting occurs, by moving the filament forward or by removing the filament according to very precise movements, to achieve at the orifice either the deposition of a certain volume or, by way of a removal by decompression, what is known as *"retraction*".

However, this method applies to raw materials that have high fluidity and a good ability to adhere in the melted state, as well as thermal stability that ensures maintenance of physical and chemical properties during processing steps, particularly during melting and solidification of the filament during printing.

Thus, polymer materials used to date for additive manufacturing, known as "3D printing" are chosen for, among other things, characteristics of fluidity when in a melted state, adherence between successive layers, and mechanical strength when in a solid state. For example, ABS is commonly used in 3D printing.

Generally rigid PVC, particularly that used in piping and fittings for building construction, does not meet these characteristics and is not currently used in additive manufacturing.

PVC is indeed a very viscous material when melted, unlike a traditional fluid material, such as ABS. PVC transitions over a narrow temperature range between solid and soft states. The viscosity gradient of PVC makes the filament deformable before it is plastic enough for printing. This causes a significant risk of clogging the printing nozzle. A quantity of partially melted plasticized material also leads to loss of precision in guidance of the printing nozzle.

In a 3D printer, heating the material is achieved by contact with the walls of the nozzle. PVC is well known for its habit of depositing a residue on hot surfaces, a well-known clogging phenomenon in traditional extrusion of PVC. This residue carbonizes in a relatively short time and detaches in flakes as solid black inclusions. Nozzles on the market have a diameter on the order of tens of millimeters at the output orifice. This diameter does not allow for evacuation of these solid particles without significantly disturbing the flow.

Thus, equipment available on the market is not usable for processing PVC. Additionally, no equipment or process currently exists for PVC-based 3D printing.

A goal of the present invention is a print head, a device and a process for 3D printing using PVC.

### Summary of invention

The present invention proposes a 3D print head according to claim 1, a 3D printer with such a print head according to claim 10 and a 3D printing process according to claim 11.

According to the invention, the print head for 3D printing on a deposition surface using a PVC filament comprises a cold body into which the PVC filament is fed in a solid state, provided for transmitting the PVC filament, still in a solid state, to a hot body with a lower face ending with a nozzle with an output orifice for the output of PVC as extrudate. The nozzle and the hot body are made in one piece.

The present invention thus proposes a design of a nozzle and hot body made in one piece. This makes it possible to achieve a decreasing viscosity within the material flow, reaching its optimum at the point of deposition, particularly by monitoring the temperature of the material at the orifice. Conduction is improved between the heating resistor and the end of the nozzle.

According to one embodiment, the hot body is arranged to enable direct radiation in the direction of the object being printed. In other words, the heating element allows to preheat the deposition surface and/or the object by direct radiation. The hot body is arranged for direct radiation from the hot body towards the exterior, the radiation being greater from its lower face than from the other faces of the hot body. The heating element radiates from the lower face of the hot body in the direction of the deposition surface and/or the object to be printed or being printed.

According to one embodiment, the hot body comprises an output heating element, mounted on or around the lower face of the hot body, the output heating element preferably being selected from among a resistor mounted within the hot body, an annular resistor attached to or embedded in the lower face of the hot body, or a source of a jet of hot air, provided to direct a jet of hot air to the lower face of the hot body and/or the printing surface. An insulating device can be provided for the hot body, the insulating device enveloping the hot body except for the lower face of the hot body, which is free from thermal insulation.

Thus, providing a heating element installed under the lower face of the hot body and/or direct radiation from the lower face of the hot body allows, by direct radiation in the direction of the object being printed, to preheat the new layer which is about to be deposited on the object being printed just as the extrudate is being deposited, and to preheat the last layer of the object being printed on which the extrudate is going to be deposited. Providing a preheating of the last layer deposited on the object being printed and/or the extrudate exiting the nozzle re-softens the material and thus enables adhesion of the new layer on the last layer deposited. This feature allows a printing using PVC which has the specific characteristic of solidifying very quickly once it is deposited.

According to one aspect of the invention, the one-piece hot body and nozzle are made of a corrosion-resistant material, preferably of stainless steel, or have a corrosion-resistant coating. The corrosion-resistant material can be selected from among beryllium bronze, chrome or nickel, a standard steel with surface treatment.

By using a corrosion-resistant material for the nozzle, the service life of the nozzle will be longer. In fact, the high viscosity of PVC in a melted state causes high pressure in the nozzle which, combined with the corrosive character of the resin, causes rapid mechanical wear of the nozzle. The nozzles of prior art are made of copper, bronze or brass material, selected for excellent heat diffusion to achieve the melting point; however, such nozzles do not offer adequate hardness to assure good system service life. Printing parameters will change rapidly, to the point of making precise production impossible.

On the other hand, in a nozzle made of copper alloy, the copper component acts as a catalyst in the chemical breakdown of the vinyl matrix, which causes a chlorinated release, a factor in the degradation chain.

Thus, providing a nozzle made of corrosion-resistant materials or with a corrosion-resistant coating makes it possible to adapt the device to the specific characteristics of the PVC material, characteristics that are not taken into account in nozzles in prior art. Chrome or nickel as a surface treatment on a standard steel may be envisioned. Alternatively, beryllium bronze is of interest due to its properties of thermal conduction suitable for PVC extrusion.

The cold body can be fitted into the hot body, the cold body comprising an assembly part protruding from the lower surface of the cold body and which is fitted into a bore in the hot body. The cold body, fitted into the hot body, is centered by two cylindrical surfaces of very small total surface area size, held in position by a lateral set screw. Such an assembly between the hot body and the cold body reduces the heat exchange between the two parts. Furthermore, this assembly allows a larger functional clearance than a tight fit.

According to one embodiment, a shaft extends from the cold body to the hot body, the shaft comprising a tubular guide, preferably made from PTFE material to thermally insulate the cold body from the hot body. This reduces the length of the filament subjected to the temperature; it avoids sticking and deposit of PVC residues on the hot surface because of the tubular guide made of PTFE material.

The cold body can comprise a radiator with fins, said fins being made by an additive technique, whether wire deposition or laser sintering in order to increase the heat exchange surface area of the fins.

The present invention also proposes a 3D printer for 3D printing PVC, comprising a print head as described.

The present invention also proposes a process for 3D printing PVC for printing a PVC object using a printer or a print head as described. The process comprises the following steps: Feeding a PVC filament into a cold body connected to a drive mechanism, making the PVC filament, while still in a solid state, pass into a hot body ending in an output nozzle with an output orifice, for heating the PVC filament and obtaining an extrudate exiting the nozzle, depositing the extrudate on a deposition surface, layer by layer, to obtain the printed object. The method comprises preheating, during output, of the deposition surface by radiation from the lower face of the hot body and/or using an output heating element selected from a resistor mounted in the hot body, an annular resistor attached to or embedded in the lower face of the hot body, or a source of a jet of hot air, provided to direct a jet of hot air to the lower face of the hot body and/or the deposition surface.

Radiation from the hot body is greater from the lower face of the hot body than the radiation from the other faces of the hot body. For example, an insulating jacket is provided to insulate the hot body by enveloping the hot body, with the exception of the lower face which is free from insulation to allow radiation and thus the preheating of the object surface using the output heating element.

The preheating of the last layer deposited on the object being printed and/or the extrudate exiting the nozzle re-softens the exiting PVC that otherwise has the specific characteristic of solidifying very quickly once it has been deposited. This enables adhesion of the new layer to the last deposited layer.

### Brief description of the figures

Other features and advantages of the present invention will be shown in the description below, made in reference to the attached drawings which illustrate one example of embodiment that is in no way limiting:
[Fig. 1] shows a 3D print head according to one embodiment of the invention,
[Fig. 2] shows a view of the 3D print head in Fig.1,
[Fig. 3] shows a view of the 3D print head in Fig.1 according to one embodiment of the invention,
[Fig. 4] an exploded view of the print head in Figure 1 according to one embodiment of the invention,
[Fig. 5] is another view of a print head according to one embodiment of the invention,

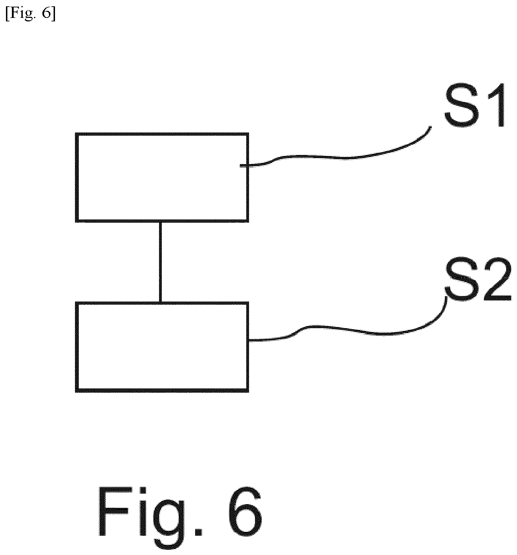

[Fig. 6] is a view showing a 3D printing method according to one embodiment of the invention.

### Detailed Description.

In the drawings, identical and similar parts are in indicated with identical or similar part numbers.

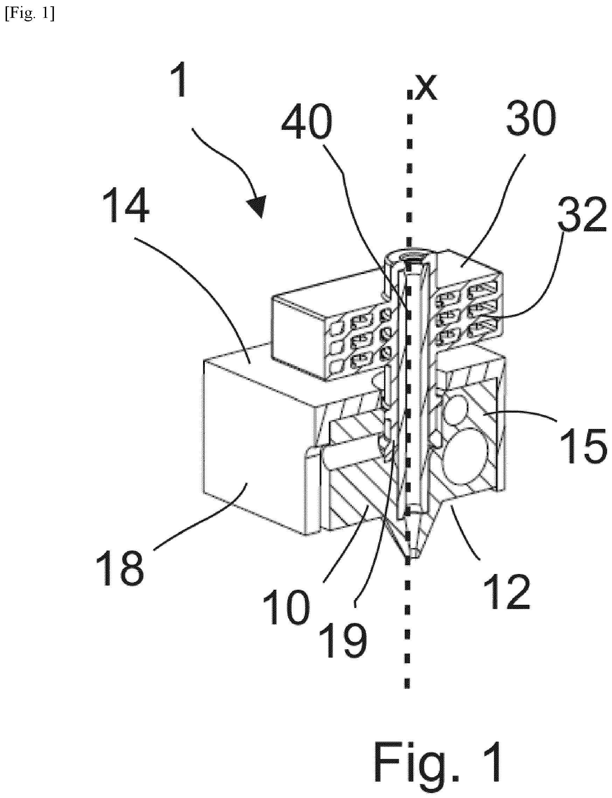

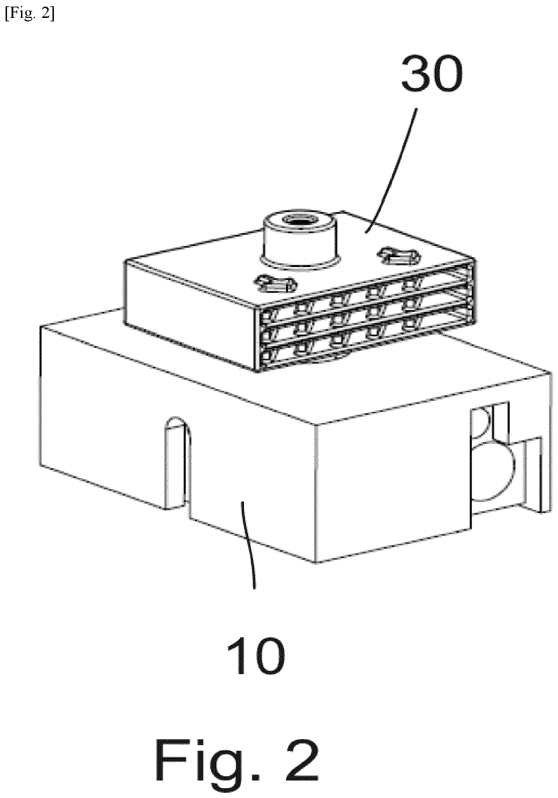

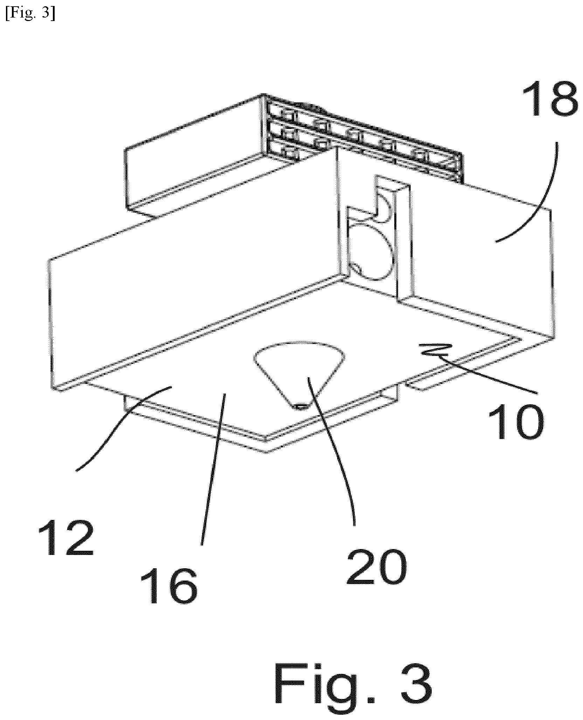

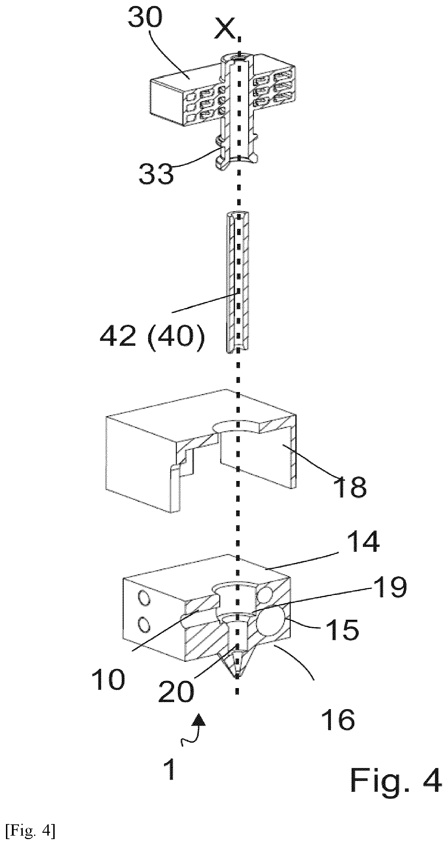

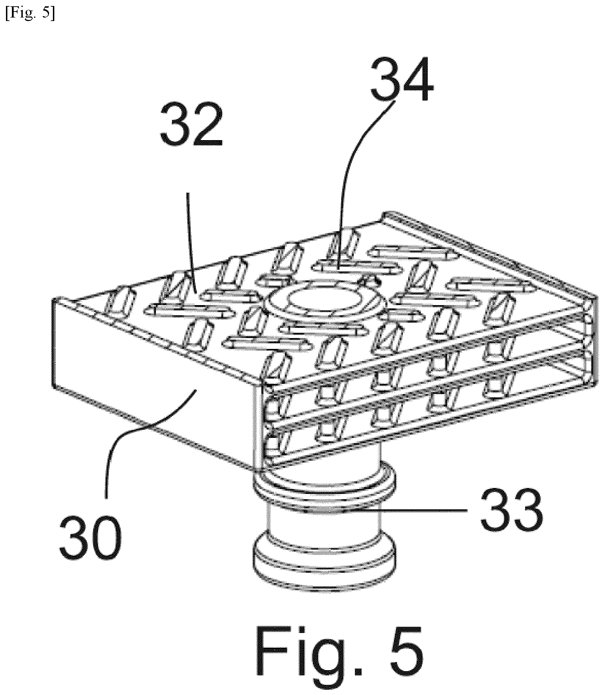

Figures 1 to 5 show a 3D print head for a 3D printer using PVC filaments.

The print head 1 comprises a cold body 30 into which is fed a PVC filament in solid state, provided for transmitting the PVC filament, still in a solid state, to a hot body 10 with a lower face 12 ending in a nozzle 20 with an output orifice for the output of PVC in the form of melted extrudate.

The nozzle 20 is conical in shape, oriented downwards, around a nozzle axis X. The nozzle 20 is in contact with the obj ect to be produced and allows to set the diameter of the PVC extrudate exiting the print head.

Unlike prior art print heads, the hot body 10 and the nozzle 20 according to the present invention are in one piece.

Thus, while in prior art the nozzle is threaded into the lower part of the hot body and thus heated by contact with the hot body, that is to say through the threading and the bearing surface at the end of the threading, in the present invention the hot body and the nozzle are in one piece. This provides greater precision in controlling the temperature of the material at the output orifice and prevents overheating the hot body, to achieve an extrudate at an ideal temperature at the output orifice.

The hot body 10 and nozzle 20 are a single piece made from corrosion-resistant material, preferably stainless steel of the same kind as used in industry for tools and equipment specific to the processing of PVC, or are provided with a corrosion-resistant surface coating.

Additionally, the nozzle 20 according to the present invention is designed to reduce the deposit of residues in the nozzle and the burning due to material retention that can happen with PVC material. Thus, the nozzle is free from abrupt changes in cross-section and has internal geometries offering changes in cross-section according to angles designed for PVC rheology, which are less than 50°. The hot body 10 is provided for heating of the nozzle 20. Thus, the hot body 10 comprises a heating element 15 and a control thermocouple. For example, the hot body 10 is equipped with a cylindrical resistor as the heating element.

In order to distribute heat energy in the hot body one can envision that the first heating element 15 be symmetric in the hot body, and/or one can also provide a second heating element in the hot body 10, such as a second resistor installed in the hot body 10, preferably in symmetry with respect to the nozzle axis X. Preferably, the heating element(s) may possibly consist of a heat source and a "heat pipe" for the purpose of distributing heat according to a specific flow.

According to one aspect of the present invention, an output heating element 16 is provided in the hot body 10 and/or on the lower surface 12 of the hot body. The output heating element 16 can be attached to the lower surface or embedded in the lower surface.

In the embodiment shown the output heating element 16 is an output resistor, attached to the lower face 12 of the hot body.

The output heating element is preferably annular and symmetric about the nozzle's axis.

Such a heating element on the lower face of the hot body advantageously allows to uniformly diffuse the heat in the hot body while putting distance between the heat source of the resistor and the cold body.

The person skilled in the art also understands that a heating element positioned under the lower face of the hot body, by direct radiation in the direction of the object being printed, makes it possible to preheat the new layer that is about to be deposited on the object being printed, just as the extrudate is being deposited, and to preheat the last layer of the object being printed on which the extrudate is going to be deposited.

In another embodiment, the output heating element is an exterior jet of hot air, which can provide preheating of the surface of the object when the melted PVC filament is being deposited. It passes through the hot body to emerge in the vicinity of the deposition orifice. The source of the jet of hot air is preferably designed to direct the jet of hot air in an annular arrangement around the body for a uniformly distributed preheating.

Thus, during the 3D printing, the deposition surface is heated near the output, the preheating being achieved by radiation from the output heating element selected from among a resistor mounted within the hot body, an annular resistor attached to or embedded in the lower surface of the hot body, or a source of a jet of hot air, provided to direct a jet of hot air to the lower face of the hot body and/or the deposition surface.

In fact, PVC has the specific characteristic of solidifying very quickly once it is deposited. Providing a preheating of the last layer deposited on the object being printed, and/or the extrudate exiting the nozzle re-softens the material and thus enables adhesion of the new layer on the last layer deposited.

An insulating jacket 18 is provided to insulate the hot body. Thus, the insulating jacket envelopes the hot body, with the exception of the lower face 12 which is free from any insulation, in order to allow preheating of the object's surface by the output heating element.

The insulating jacket 18 thus covers the upper face 14 of the hot body as well as the lateral sides of the hot body, insulating the cold body from the hot body with which it is assembled.

Thus, the present invention provides for using the heat of the hot body not only for melting the PVC for printing but also for preheating the deposition surface. The hot body can directly radiate from the lower face that is not insulated, or the heating element can be placed near the lower surface to enable radiation and preheating of the deposition surface, or an additional heating element can be attached to or placed near the lower face to allow radiation and preheating of the deposition surface.

The cold body 30 is provided to connect the hot body 10 with a drive mechanism (not shown). The function of the cold body 30 is to prevent diffusion of heat to the drive mechanism and to keep the PVC filament in a solid state.

The cold body 30 comprises a radiator 32 with fins 34 discharging the heat into the ventilation air flow. In the embodiment shown, to increase the heat exchange surface of the fins and increase the heat diffusion by the radiator, the fins 34 are made using an additive technique, whether wire deposition, or laser sintering; these techniques create a lattice for more efficient heat exchange than the simple flat fins of prior art. This lattice is designed to be subjected to a flux of cooling air or by any fluid coolant.

The hot body 10 and the cold body 30 are assembled in a manner to reduce the heat exchange between them. To do this, the cold body 30 comprises an assembly part 33 that protrudes from the lower surface of the cold body 30 which is fitted into a bore 19 in the hot body.

Preferably, the radiator 32, fitted into the hot body, is centered by two cylindrical surfaces of very small total surface area size, held in position by a lateral set screw. This assembly allows a larger functional clearance than a tight fit.

In the example shown, a shaft 40 extending from the cold body to the hot body is provided for the passage of the PVC filament, this advantageously reducing the length of filament subjected to temperature. The shaft 40 comprises a tubular guide 42 which prevents sticking and PVC residue deposits on the hot surface of the hot body 10.

The tubular guide 42 can be advantageously made from a PTFE material (polytetrafluoroethylene), chosen for its chemical and heat resistance as well as its extremely low friction coefficient.

This invention is not limited to the exemplary embodiment described above but encompasses all variants. Particularly, a feature illustrated and/or described in combination with other features can be provided independently or in combination with other features illustrated independently or in combination with other features and do so either independently or in arbitrary combination.

## Claims

1. A print head (1) for 3D printing on a deposition surface using a PVC filament, comprising a cold body (30) into which is fed a PVC filament in a solid state, provided for transmitting the PVC filament, still in a solid state, to a hot body (10) with a lower face (12) ending in a printer nozzle (20) with an output orifice for the output of PVC as extrudate, **characterized in that** the printer nozzle (20) and the hot body (10) are in one piece.

2. The print head according to claim 1, in which the hot body (10) is arranged to enable radiation from the lower face in the direction of the deposition surface, particularly the hot body (10) comprises an output heating element (16) mounted on or around the lower face (12) of the hot body, the output heating element being preferably selected from among a resistor installed within the hot body, an annular resistor attached to or embedded in the lower face of the hot body, or a source of a jet of hot air, provided to direct hot air to the lower face of the hot body and/or the printing surface.

3. The print head according to claim 1 or 2, comprising an insulating device (18) to insulate the hot body, the insulation device enveloping the hot body except for the lower face (12) of the hot body which is free from thermal insulation.

4. The print head according any of claims 1 to 3, in which the one-piece hot body and nozzle is made of a corrosion-resistant material, preferably of stainless steel, or has a corrosion-resistant coating.

5. The print head according to claim 4, in which the corrosion-resistant material is chosen from beryllium bronze, a standard steel with a surface treatment, for example a chrome or nickel surface treatment.

6. The print head according to any of claims 1 to 5, in which the cold body (30) is fitted into the hot body (10), the cold body comprising an assembly part (33) protruding from the lower face of the cold body and fitted into a bore (19) in the hot body.

7. The print head according to claim 6, in which the cold body, fitted into the hot body, is centered by two cylindrical surfaces of very small total size, held in position by a lateral set screw.

8. The print head according to the preceding claim, in which a shaft (40) extends from the cold body to the hot body, the shaft (40) comprising a tubular guide (42), preferably made of PTFE material to thermally insulate the cold body from the hot body.

9. The print head according to any of the preceding claims, in which the cold body (30) comprises a radiator (32) with fins (34), in which, in order to increase the heat exchange surface of the fins, the fins (34) are made by an additive technique, either wire deposition or laser sintering.

10. A 3D printer for 3D printing PVC comprising a print head according to any of the preceding claims.

11. A 3D PVC printing process for printing a PVC object using a printer according to claim 10 or a print head according to any of claims 1 to 9, comprising:
Feeding a PVC filament into a cold body connected to a drive mechanism,
Passing the PVC filament, still in a solid state, into a hot body ending in an output nozzle with an output orifice, for heating the PVC filament and obtaining an extrudate at the output of the nozzle,
Depositing the extrudate on a deposition surface, layer by layer, to obtain the object to be printed,
In which the process comprises preheating, during output, of the deposition surface by radiation from the lower face of the hot body and/or using an output heating element, selected from among a resistor mounted in the hot body, an annular resistor attached to or embedded in the lower face of the hot body, or a source of a jet of hot air, provided to direct a jet of hot air to the lower face of the hot body and/or deposition surface.
